(19) Europäisches Patentamt

European Patent Office

Office européen des brevets

(11) Veröffentlichungsnummer: **0 286 793 B1**

(12) # EUROPÄISCHE PATENTSCHRIFT

(45) Veröffentlichungstag der Patentschrift: **11.11.92**

(21) Anmeldenummer: **88101977.2**

(22) Anmeldetag: **11.02.88**

(51) Int. Cl.⁵: **H04M 3/18**, H04M 19/00, H04M 19/02

(54) **Schaltungsanordnung für den Überspannungsschutz und die Rufstromeinspeisung an einer Anschlussleitung für Fernmelde-, insbesondere Fernsprechvermittlungsanlagen.**

(30) Priorität: **14.04.87 DE 3712572**

(43) Veröffentlichungstag der Anmeldung:
**19.10.88 Patentblatt 88/42**

(45) Bekanntmachung des Hinweises auf die
Patenterteilung:
**11.11.92 Patentblatt 92/46**

(84) Benannte Vertragsstaaten:
**BE CH FR GB IT LI LU NL**

(56) Entgegenhaltungen:
**DE-A- 2 334 698**
**DE-A- 2 748 181**
**DE-A- 2 839 892**
**DE-A- 2 843 213**
**FR-A- 2 382 810**

(73) Patentinhaber: **TELENORMA GMBH**
**Mainzer Landstrasse 128-146**
**W-6000 Frankfurt/Main(DE)**

(72) Erfinder: **Mitlehner, Gerhard**
**Frankfurter Strasse 66a**
**W-6070 Langen(DE)**

EP 0 286 793 B1

**Beschreibung**

Die Erfindung betrifft eine Schaltungsanordnung für den Überspannungsschutz und die Rufstromeinspeisung an einer Anschlußleitung für Fernmelde-, insbesondere Fernsprechvermittlungsanlagen.

Aus der DE-OS 23 34 698 ist eine Überspannungsschutzschaltung bekannt, wobei in Graetz-Schaltung angeordnete Dioden mit Überspannungsschutzelementen zusammen wirken. Dabei sind jeweils zwei paarweise gegen ein Erdpotential geschaltete Überspannungsschutzelemente vorgesehen, die an den Gleichstromzweig der Graetz-Schaltung angeschlossen sind. Der Wechselstromzweig der Graetz-Schaltung ist mit den Adern der Anschlußleitung verbunden. Diese Schaltungsanordnung dient ausschließlich der Ableitung von Überspannungen und ist nicht dazu geeignet, zusätzlich andere Aufgaben zu erfüllen.

Eine Schaltungsanordnung zur Durchführung eines Verfahrens zur spulen-, relaiskontakt- und transformatorfreien Rufstrom - und Schleifenstromeinspeisung ist aus der DE-OS 28 39 892 bekannt. Dabei sind vier aus Transistoren bestehende Stromquellen vorgesehen, die für die Rufstromeinspeisung jeweils paarweise abwechselnd angesteuert werden. Der Rufstrom wird dabei aus der Betriebsspannung entnommen, die während der Rufstromaussendung abwechselnd in der einen und in der anderen Polarität an die einzelnen Adern a und b angeschaltet wird. Hierfür sind Transistoren unterschiedlicher Polarität erforderlich, die so zusammengeschaltet sind, daß sie sich gegenseitig aufsteuern. Da diese Schaltungsanordnung für die Rufstromeinspeisung nicht geeignet ist, einen Überspannungsschutz für die Anschlußleitung zu bewirken, sind zusätzliche Dioden D4 vorgesehen, die in Graetz-Schaltung angeordnet sind.

Die Aufgabe der Erfindung besteht darin, eine Schaltungsanordnung vorzustellen, wobei die für den Überspannungsschutz zuständigen Halbleiterschalter gleichzeitig für die Rufstromeinspeisung benutzbar sind und umgekehrt.

Diese Aufgabe wird mit einer Merkmalskonbination gelöst, wie sie im Patentanspruch 1 angegeben ist.

Damit wird in vorteilhafter Weise erreicht, daß ein und dieselbe Schaltungsanordnung sowohl für den Überspannungsschutz als auch für die Einspeisung des Rufstroms bei einer Anschlußleitung für eine Fernmelde-, insbesondere Fernsprechvermittlungsanlage benutzt werden kann. Durch die in den Unteransprüchen angegebenen Weiterbildungen der Erfindung ergibt sich der Vorteil, daß gleichartige Halbleiterschalter einsetzbar sind. Da die gesamte Schaltungsanordnung als integrierter Schaltkreis herstellbar ist, kann mit nur einem einzigen Bauelement der Überspannugnsschutz und auch die Rufstromanschaltung bewirkt werden.

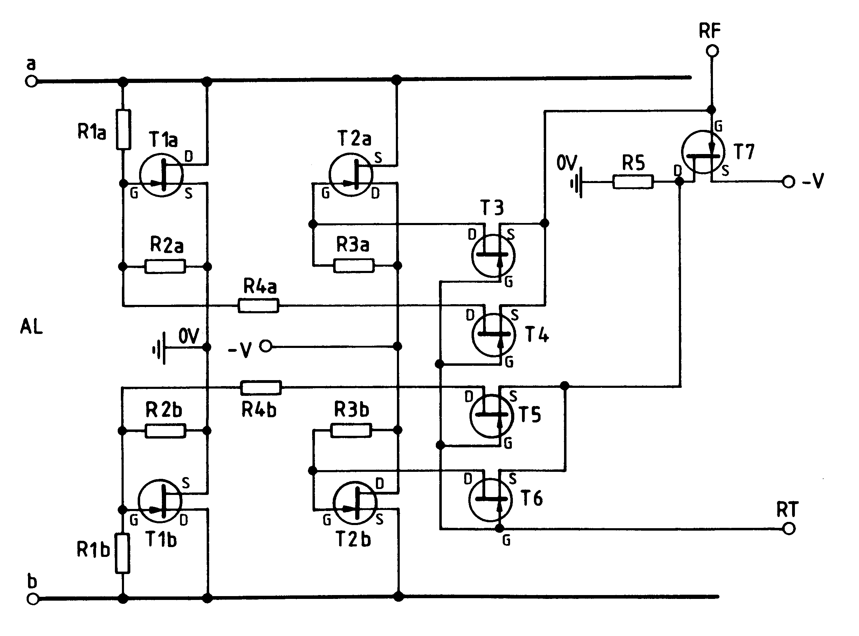

Ein Ausführungsbeispiel der Erfindung wird nachfolgend anhand einer Zeichnung näher erläutert. In der Zeichnung ist eine Anschlußleitung AL dargestellt, die aus den beiden Adern a und b besteht. An jede dieser Adern a und b sind zwei gleichartige Transistoren T1a und T2a bzw. T1b und T2b mit jeweils unterschiedlichen Anschlüssen D (Drain) und S (Source) so angeschlossen, daß auf jede der Adern a und b beide Pole OV und -V der Versorgungsspannung anschaltbar sind. Für den Fall, daß diese Schaltungsanordnung als Überspannungsschutzschaltung wirkt, bedeutet dies, daß umgekehrt auch jede einzelne Ader a und b mit jedem Pol OV und -V der Versorgungsspannung direkt verbindbar ist. Die Steuerelektroden G (Gate) der beiden ersten Transistoren T1a und T1b sind mit einem aus Widerständen R1a und R2a bzw. R1b und R2b bestehenden Spannungsteiler verbunden, wodurch bewirkt wird, daß bei auftretenden positiven Überspannungen auf einer der beiden Adern a und b oder auch auf beiden Adern a und b der jeweilige Transitor T1a oder T1b oder auch beide Transistoren T1a und T1b selbsttätig leitend werden. Die auftretende Überspannung wird dadurch sofort gegen OV abgeleitet. Entsprechendes gilt für die beiden anderen Transistoren T2a und T2b, die im Falle einer negativen Überspannung leitend werden, weil sie dann durch einen über den Widerstand R3a bzw. R3b fließenden Steuerstrom selbsttätig aufgesteuert werden.

Für die Rufstromeinspeisung sind 4 als Schalter betriebene Steuertransistoren T3, T4, T5 und T6 vorgesehen, deren Steuereingänge G zusammengeschaltet sind und von einem Rufrhythmustakt RT beaufschlagt werden. Dieser Rufrhythmustakt RT bietet beispielsweise für eine Zeit von 4 Sekunden Sperrpotential an und für jeweils 1 Sekunde Durchschaltepotential, so daß ein 5 Sekunden-Rufrhythmus entsteht. Eine Ruffrequenz RF wird direkt zwei Transistoren T3 und T4 angeboten und gelangt außerdem zum Steuereingang G eines weiteren Transistors T7. Dieser Transistor T7 invertiert die Ruffrequenz RF und schaltet sie mit umgekehrter Polarität an die Schaltelektroden S der beiden anderen Transitoren T5 und T6. Jede Schaltstrecke der Steuertransistoren T3 bis T6 ist jeweils mit einem Steuereingang G des zugehörigen Halbleiterschalters T1a, T2a, T1b und T2b verbunden. Durch die Ruffrequenz RF wird bei geöffneten Steuertransistoren T3 bis T6 bewirkt, daß jeweils zwei der vier steuerbaren Halbleiterschalter beispielsweise T1a und T2b oder T1b und T2a überkreuz angesteuert werden, wobei analog dem Signalverlauf der Ruffrequenz die Potentiale OV und -V abwechselnd an die eine Ader a und an die andere Ader b angelegt werden. Für die Ansteuerung der beiden Transistoren T1a und T1b sind zusätzliche Widerstände R4a und R4b vorgesehen, um die Arbeitspunkte bei dieser Schaltungsart eindeutig zu bestimmen. Bei der Rufstromeinspeisung arbeiten also die in Graetz-Schaltung angeordneten Halbleiterschalter als Analogschalter entsprechend der Ruffrequenz RF und im Falle der Wirkung als Überspannungsschutzschaltung als selbsttätig durchschaltende Schalter.

Alle in dieser Schaltungsanordnung vorkommenden Transistoren T1a, T1b, T2a, T2b, T3 bis T7 sind Feldeffekt-Transistoren in gleicher Ausführung. Die jeweilige Wirkung wird durch die zum Teil unterschiedliche Beschaltung der Steuereingänge und Schaltstrecken erreicht. Eine besonders vorteilhafte Anwendung der gesamten Schaltungsanordnung ist dann gegeben, wenn diese in einem einzigen integrierten Schaltkreis zusammengefaßt ist.

## Patentansprüche

1. Schaltungsanordnung für den Überspannungsschutz und die Rufstromeinspeisung an einer Anschlußleitung für Fernmelde-, insbesondere Fernsprechvermittlungsanlagen, wobei an die einzelnen Adern der Anschlußleitung in Graetz-Schaltung angeordnete Halbleiter angeschlossen und mit den Polen der Versorgungsspannung verbunden sind,
dadurch gekennzeichnet,
daß in Graetz-Schaltung angeordnete steuerbare Halbleiter (T1a, T2a, T1b, T2b) an ihren Steuereingängen (G) so beschaltet sind, daß sie bei auftretenden Überspannungen selbsttätig durchschalten und diese auf den jeweiligen Pol der Versorgungsspannung (OV'-V) ableiten, daß die Steuereingänge dieser Halbleiter (T1a, T2a, T1b, T2b) außerdem mit Steuertransistoren (T3, T4, T5, T6) verbunden sind, die von einem Rufrhythmustakt (RT) aufgesteuert werden und in zwei Gruppen von Steuertransistoren (T3, T4 und T5, T6) aufgeteilt sind, wovon eine Gruppe (T3, T4) die Ruffrequenz (RF) direkt und die andere Gruppe (T5, T6) über einen weiteren Transistor (T7) invertiert angeboten bekommt und auf die jeweiligen Steuereingänge (G) der in Graetz-Schaltung angeordneten Halbleiterschalter (T1a, T2a, T1b, T2b) durchschaltet.

2. Schaltungsanordnung nach Anspruch 1,
dadurch gekennzeichnet,
daß die in Graetz-Schaltung angeordneten steuerbaren Halbleiterschalter (T1a, T2a, T1b, T2b) aus Feldeffekt-Transistoren bestehen.

3. Schaltungsanordnung nach Anspruch 1,
dadurch gekennzeichnet,
daß die Steuertransistoren (T3, T4, T5 und T6) als Feldeffekt-Transistoren ausgeführt sind.

4. Schaltungsanordnung nach Anspruch 1,
dadurch gekennzeichnet,
daß der die Ruffrequenz (RF) invertierende Transistor (T7) ein Feldeffekt-Transistor ist.

5. Schaltungsanordnung nach Anspruch 1,
dadurch gekennzeichnet,
daß die in Graetz-Schaltung angeordneten steuerbaren Halbleiterschcalter (T1a, T2a, T1b, T2b) zusammen mit den Steuertransistoren (T3, T4, T5, T6) und dem die Ruffrequenz invertierenden Transistor (T7) in einer integrierten Schaltung zusammengefaßt sind.

## Claims

1. Circuit arrangement for overvoltage protection and ringing current supply to a connection line for telecommunications installations, especially telephone exchange installations, wherein semiconductors arranged in a Graetz circuit are coupled with the individual leads of the connection line and connected with the poles of the supply voltage, characterised thereby that controllable semiconductors (T1a, T2a, T1b, T2b) arranged in Graetz circuit are so connected at their control inputs (G) that they automatically switch through in the case of occurring overvoltage and shunt this off to the respective pole (OV,-V) of the supply voltage, and that the control inputs of these semiconductors (T1a, T2a, T1b, T2b) are moreover connected with control transistors (T3, T4, T5, T6), which are driven to be conductive by a call synchronising pulse (RT) and are divided into two groups of control transistors (T3, T4 and T5, T6), of which one group (T3, T4) receives the call frequency (RF) directly and the group (T5, T6) inverted by way of a further transistor (T7) and switch it through to the respective control inputs (G) of the semiconductors (T1a, T2a, T1b, T2b) arranged in Graetz circuit.

2. Circuit arrangement according to claim 1, characterised thereby that the controllable semiconductor switches (T1a, T2a, T1b, T2b) arranged in Graetz circuit consist of field effect transistors.

3. Circuit arrangement according to claim 1, characterised thereby that the control transistors (T3, T4, T5 and T6) are constructed as field effect transistors.

4. Circuit arrangement according to claim 1, characterised thereby that the transistor (T7) inverting the call frequency (RF) is a field effect transistor.

5. Circuit arrangement according to claim 1, characterised thereby that the controllable semiconductor switches (T1a, T2a, T1b, T2b) arranged in Graetz circuit are combined into an integrated circuit together with the control transistors (T3, T4, T5, T6) and the transistor (T7) inverting the call frequency.

**Revendications**

1. Circuit pour la protection contre les surtensions et pour l'injection du courant de sonnerie dans la ligne de connexion à un central de télécommunication, en particulier un central téléphonique, dans lequel les conducteurs individuels de la ligne de connexion sont connectés à des dispositifs semiconducteurs en montage de Graetz et aux pôles de la tension d'alimentation,
caractérisé en ce que les dispositifs semiconducteurs (T1a, T2a, T1b, T2b) montés en montage de Graetz sont connectés à leurs entrées de commande (G) de manière qu'ils commutent automatiquement lorsqu'une surtension apparaît et dérivent celle-ci vers chaque pole de la tension d'alimentation (OV'-V),
en ce que les entrées de commande de ces dispositifs semiconducteurs (T1a, T2a, T1b, T2b) sont en outre connectées à des transistors de commande (T3, T4, T5, T6) qui sont attaqués par un générateur de fréquence d'appel (RT) et divisés en deux groupes de transistors de commande (T3, T4 et T5, T6), un groupe (T3, T4) recevant directement la fréquence d'appel (RF) et l'autre groupe (T5, T6) recevant la fréquence d'appel après inversion dans un autre transistor (T7), chacun desdits transistors de commande commutant le signal d'entrée vers l'entrée de commande (G) d'un dispositif semiconducteur (T1a, T2a, T1b, T2b) respectif du montage de Graetz.

2. Circuit selon la revendication 1, caractérisé en ce que les commutateurs semiconducteurs (T1a, T2a, T1b, T2b) montés en montage de Graetz sont constitués de transistors à effet de champ.

3. Circuit selon la revendication 1, caractérisé en ce que les transistors de commande (T3, T4, T5, T6) sont des transistors à effet de champ.

4. Circuit selon la revendication 1, caractérisé en ce que le transistor (T7) est un transistor à effet de champ.

5. Circuit selon la revendication 1, caractérisé en ce que les commutateurs semiconducteurs (T1a, T2a, T1b, T2b) montés en montage de Graetz, ainsi que les transistors de commande (T3, T4, T5, T6) et le transistor (T7) inversant la fréquence d'appel sont réunis dans un circuit intégré.